# EUROPÄISCHE PATENTSCHRIFT

(11) **EP 0 806 878 B1**
(45) Veröffentlichungstag und Bekanntmachung des Hinweises auf die Patenterteilung: **28.02.2001**
(21) Anmeldenummer: 97401003.5
(22) Anmeldetag: 02.05.1997
(51) Int. Cl.: H04Q 7/32

(54) **Anordnung zum Betreiben eines mobilen Endgerätes in einem Funkvermittlungssystem bei unterschiedlichen Übertragungsstandards**
Arrangement for using a mobile terminal in a radio switching system with different transmission standards
Arrangement pour l'utilisation d'un terminal mobile dans un réseau de commutation radio avec des standards de transmission différents

(30) Priorität: 07.05.1996 DE 19618243
(43) Veröffentlichungstag der Anmeldung: 12.11.1997
(73) Patentinhaber: ALCATEL, 75008 Paris (FR)
(72) Erfinder: Werbus, Volker, 82205 Gilching (DE)
(74) Vertreter: Müller, Joachim, Dipl.-Ing.

(56) Entgegenhaltungen:
- EP-A- 0 585 030
- WO-A-95/23485
- GB-A- 2 241 850

## Beschreibung

Die Erfindung betrifft eine Anordnung zum Betreiben eines mobilen Endgerätes beispielsweise wahlweise über ein Schnurlossystem im Festnetz nach dem DECT (Digital European Cordless Telecommunications)-Standard, oder über ein zellulares Mobilfunksystem nach dem GSM (Global System for Mobile Communication)-Standard. In zunehmendem Maße besteht für viele Teilnehmer das Bedürfnis, unabhängig vom Aufenthaltsort, sowohl in einem abgegrenzten Firmengelände, das von einem Schnurlossystem versorgt wird, als auch im Auto telefonieren zu können. Üblicherweise benutzt ein Teilnehmer dazu auf dem Firmengelände einen schnurlosen Telefonapparat, der nach dem DECT-Standard arbeitet, und im Auto ein Autotelefon, das nach dem GSM-Standard arbeitet. Um den Einsatz zweier unterschiedlicher Telefonapparate zu vermeiden, ist es bekannt, ein Zweisysteme-Handgerät, engl. Dual-mode handy, zu verwenden, das sowohl DECT- als auch GSM-Signale senden und empfangen kann, vgl. DE 43 44 702 A1. Der Funkkontakt zum DECT-System wird dabei bevorzugt, da in DECT-Systemen technisch bedingt die Sprachqualität besser als in GSM-Systemen ist. Zwar ist eine Realisierung des Zweisysteme-Handgerätes möglich, allerdings ist ein erheblicher Aufwand erforderlich, um die unterschiedlichen Festlegungen der Standards, wie zum Beispiel Sprachkodierung, Verschlüsselung, Handover-Prozedur und Authentifizierung des mobilen Endgerätes, aneinander anzupassen. Um diese Forderung zu erfüllen, ist es bekannt, jeder DECT-Kontrollstation eine sog. Interworking-Unit zuzuordnen, vgl. Funkschau, Heft 3, 1996, Seite 24, Franzis Verlag GmbH, Feldkirchen.

Die GB-A-2 241 850 beschreibt ein DECT-Telefon, das über eine (mobile) Relaisstation auf eine GSM-Basisstation zugreifen kann. Dabei sind für die Übertragung zwischen Telefon und Relaisstation bzw. zwischen Relaisstation und Basisstation unterschiedliche Übertragungsstandards vorgesehen (d.h. DECT bzw. GSM). Die WO 95/23485 offenbart ein Multimode-Nachrichtensystem mit einer Basisstation, die gesteuert von unterschiedlichen drahtgebundenen oder drahtlosen Endgeräten unterschiedliche Übertragungsstandards verarbeiten kann.

Mit der Erfindung wird nun die Aufgabe gelöst, eine kostengünstige Anordnung anzugeben, bei der ein mobiles Endgerät in Schnurlossystemen oder in zellularen Mobilfunksystemen eingesetzt werden kann, ohne Eingriffe in die Netzinfrastruktur vornehmen zu müssen.

Diese Aufgabe wird mit der im ersten Patentanspruch beschriebenen Anordnung gelöst.

Das Wesen der Erfindung besteht darin, daß über eine Schnittstelle zwischen dem mobilen Endgerät und einer fest installierten Baugruppe, die Zugriff zu dem Schnurlossystem oder dem zellularen Mobilfunksystem hat, alle notwendigen Daten standardunabhängig übertragen werden, die für eine Mensch-Maschine-Kommunikation erforderlich sind. Im Falle eines Telefons ist das die Sprache, der Inhalt der Displayanzeige und die Information über die jeweils bestätigte Taste.

Die Wirkungsweise der Erfindung wird nachstehend an einem Ausführungsbeispiel erläutert. Die dazugehörige Zeichnung zeigt eine Figur mit einer Schnittstellenanordnung zwischen einem GSM-Gerät und einem DECT-Gerät.

In einem ersten Anwendungsfall wird der Zugriff eines schnurlosen Telefons gemäß dem DECT-Standard kurz DECT-Telefon, zum GSM-Netz beschrieben.

Dazu wird ein fest im Fahrzeug installierter Adapter für ein GSM-Telefon beispielsweise mit einer Infrarotschnittstellenschaltung ausgerüstet. Ebenso wird das DECT-Telefon mit einer Infrarotschnittstellenschaltung versehen, sodaß mit dem DECT-Telefon sowohl bestimmungsgemäß auf das DECT-Netz als auch über die Infrarotschnittstelle auf das GSM-Netz zugegriffen werden kann. Das GSM-Telefon kann dann im vorliegenden Fall entfallen.

In einem zweiten Anwendungsfall wird das GSM-Telefon und eine DECT-Basisstation mit jeweils einer Infrarotschnittstellenschaltung ausgerüstet. In diesem Fall ist es möglich, mit einem GSM-Telefon auf das DECT-Netz zuzugreifen.

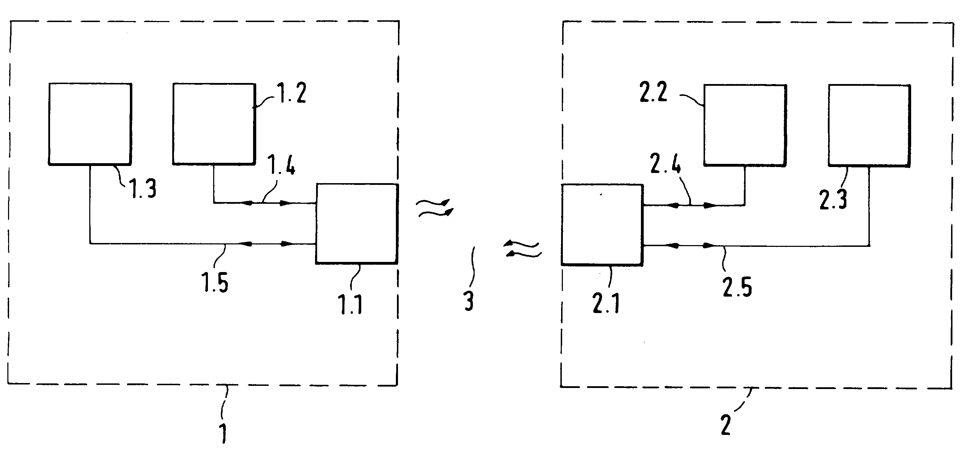

Gemäß Figur besteht die Schnittstellenanordnung aus einer Schnittstellenschaltung 1 in einem GSM-Adapter und einer Schnittstellenschaltung 2 in einem DECT-Telefon. Es sind in der Figur nur die Baugruppen dargestellt, die wesentlich für die Erläuterung der Erfindung sind. Mit den Schnittstellenschaltungen 1, 2 wird eine duplexfähige Verbindung über eine Infrarotstrecke 3 hergestellt. Jede Schnittstellenschaltung 1, 2 besteht im wesentlichen aus einem Infrarot-Transceiver 1.1, 2.1, einem digitalen Signalprozessor 1.2, 2.2 und einem Codec 1.3, 2.3.

Bei einem Verbindungswunsch eines Teilnehmers mit einem DECT-Gerät über das GSM-Netz muß zunächst der Sender des Infrarot-Transceivers 2.1 aktiviert werden. Das geschieht entweder durch Betätigen einer im DECT-Gerät befindlichen Taste oder automatisch durch sequentielle Abfrage der Schnittstellenanordnung, sog. polling, ob eine Information zur Übertragung vorliegt. Die von der Tastatur des DECT-Gerätes ausgelösten Wählinformationen und Befehle werden von dem digitalen Signalprozessor 2.2 als aufbereitete Daten über eine bidirektionale Datenleitung 2.4, den Infrarot-Transceiver 2.1 und die Infrarotstrecke 3 dem Transceiver 1.1 des GSM-Gerätes zugeführt, von dem eine bidirektionale Datenleitung 1.4 zu dem digitalen Signalprozessor 1.2 des GSM-Gerätes führt, mit dem die Wählinformationen und Befehle des DECT-Gerätes so weiterverarbeitet werden, als würden die Wählinformationen und Befehle von einem GSM-Telefon stammen. Nach dem Verbindungsaufbau wird die Sprache oder beispielsweise bei Facsimileübertragung werden die Daten vom DECT-Gerät über den Codec 2.3 im PCM- oder ADPCM-Format und eine bidirektionale Leitung 2.5 zum Transceiver 2.1 und von dort über die Infrarotstrecke 3, dem Transceiver 1.1 über eine bidirektionale Leitung 1.5 zum Codec 1.3 des GSM-Gerätes übertragen.

Durch die einfache und somit kostengünstige Schnittstellenanordnung ist es für den Teilnehmer möglich, je nach Einsatzort mit nur einem mobilen Endgerät wahlweise das GSM-Netz oder das DECT-Netz zu benutzen und somit die Vorteile der unterschiedlichen Tarifstrukturen auszunutzen. Die Erreichbarkeit des Teilnehmers wird durch das Ausnutzen bekannter Netzleistungsmerkmale wie Rufweiterschalten bei Nichtmelden des Teilnehmers gewährleistet, so daß der Teilnehmer immer unter einer Rufnummer erreichbar ist. Die Infrarotschnittstelle erweist sich als besonders günstig, da keine Interferenzen mit dem entsprechenden Funkteil auftreten und die Bauteilkosten für Infrarotschnittstellen niedrig sind. Es ist aber auch möglich, bereits vorhandene Schnittstellen, beispielsweise für die Datenübertragung über GSM-Geräte, für den beschriebenen Zweck auszunutzen. In diesem Fall wäre eine Kabelverbindung zwischen GSM-Gerät und DECT-Gerät erforderlich. Die erfindungsgemäße Schnittstellenanordnung ist weitaus kostengünstiger als der Aufwand für bekannte Dual-Mode-Geräte. Durch die einfache Schaltungsstruktur ist es möglich, konzipierte Geräte mit der Schnittstellenanordnung auszurüsten oder auch bereits in Betrieb befindliche Geräte mit der Schnittstellenanordnung zu erweitern.

## Patentansprüche

1. Anordnung zum Betreiben eines mobilen Telefons in einem Funkvermittlungssystem, wobei das mobile Telefon und das Funkvermittlungssystem nach unterschiedlichen Übertragungsstandards arbeiten,
**dadurch gekennzeichnet, dass**
in dem mobilen Telefon und in einer dem Funkvermittlungssystem zugeordneten Baugruppe jeweils eine Schnittstellenschaltung (1;2) zur drahtlosen Übertragung standardunabhängiger Informationen angeordnet ist.

2. Anordnung gemäß Anspruch 1, dadurch gekennzeichnet, dass die Übertragung standardunabhängiger Informationen über eine Infrarotstrecke erfolgt.

3. Anordnung gemäß Anspruch 1, dadurch gekennzeichnet, dass das mobile Telefon ein nach dem DECT-Standard arbeitendes schnurloses Telefon ist und die dem Funkvermittlungssystem zugeordnete Baugruppe ein Adapter für ein Funktelefon ist, das nach dem GSM-Standard arbeitet.

4. Anordnung gemäß Anspruch 1, dadurch gekennzeichnet, dass das mobile Telefon ein nach dem GSM-Standard arbeitendes Funktelefon ist und die dem Funkvermittlungssystem zugeordnete Baugruppe eine nach dem DECT-Standard arbeitende Basisstation ist.

5. Anordnung gemäß Anspruch 1 und 2, dadurch gekennzeichnet, daß die Schnittstellenschaltung aus einem Infrarottransceiver (1.1, 2.1) besteht, dem ein Codec (1.3, 2.3) und ein digitaler Signalprozessor (1.2, 2.2) vorgeschaltet ist.

6. Anordnung gemäß Anspruch 5, dadurch gekennzeichnet, daß über den Codec (1.3, 2.3) Sprache oder Daten funkstandardunabhängig bidirektional übertragen werden und daß der Informationsaustausch der von der Tastatur des mobilen Telefons ausgelösten Informationen und Befehle über den digitalen Signalprozessor (1.2, 2.2) und den Infrarottransceiver (1.1, 2.1) funkstandardunabhängig erfolgt.

## Claims

1. An arrangement for operating a mobile telephone in a radio switching system wherein the mobile telephone and the radio switching system operate in accordance with different transmission standards,
characterised in that
an interface circuit (1;2) for the wireless transmission of standard-independent information is in each case arranged in the mobile telephone and in a module assigned to the radio switching system.

2. An arrangement according to Claim 1, characterised in that the transmission of standard-independent information takes place via an infrared link.

3. An arrangement according to Claim 1, characterised in that the mobile telephone is a cordless telephone operating in accordance with the DECT standard, and the module assigned to the radio switching system is an adapter for a radio telephone operating in accordance with the GSM standard.

4. An arrangement according to Claim 1, characterised in that the mobile telephone is a radio telephone operating in accordance with the GSM standard, and the module assigned to the radio switching system is a base station operating in accordance with the DECT standard.

5. An arrangement according to Claim 1 and 2,
characterised in that the interface circuit consists of an infrared transceiver (1.1, 2.1) preceded by a codec (1.3, 2.3) and a digital signal processor (1.2, 2.2).

6. An arrangement according to Claim 5, characterised in that speech or data is transmitted bidirectionally via the codec (1.3, 2.3) independently of radio communications standards and that the exchange of the information and commands generated by the keyboard of the mobile telephone takes place via the digital signal processor (1.2, 2.2) and the infrared transceiver (1.1, 2.1) independently of radio communications standards.

## Revendications

1. Agencement pour faire fonctionner un téléphone mobile dans un système de communication par radio, dans lequel le téléphone mobile et le système de communication par radio travaillent selon des normes de transfert différentes, caractérisé en ce qu'un circuit d'interface (1, 2), servant à la transmission sans fil d'informations indépendamment des normes, est agencé respectivement dans le téléphone mobile et dans un ensemble affecté au système de communication par radio.

2. Agencement selon la revendication 1, caractérisé en ce que le transfert d'informations indépendamment des normes se fait par l'intermédiaire d'une liaison infrarouge.

3. Agencement selon la revendication 1, caractérisé en ce que le téléphone mobile est un téléphone sans fil fonctionnant selon la norme DECT, et en ce que l'ensemble affecté au système de communication par radio est un adaptateur pour un radiotéléphone fonctionnant selon la norme GSM.

4. Agencement selon la revendication 1, caractérisé en ce que le téléphone mobile est un radiotéléphone fonctionnant selon la norme GSM, et en ce que l'ensemble affecté au système de communication par radio est une station de base fonctionnant selon la norme DECT.

5. Agencement selon la revendication 1 et la revendication 2, caractérisé en ce que le circuit d'interface se compose d'un émetteur-récepteur infrarouge (1.1, 2.1) en amont duquel sont câblés un codec (1.3, 2.3) et un processeur de signal numérique (1.2, 2.2).

6. Agencement selon la revendication 5, caractérisé en ce que de la voix ou des données sont transmises de manière bidirectionnelle et indépendante de la norme radio par l'intermédiaire du codec (1.3, 2.3), et en ce que l'échange des informations et commandes émises à partir du clavier du téléphone mobile se fait indépendamment de la norme radio par l'intermédiaire du processeur de signal numérique (1.2, 2.2) et de l'émetteur-récepteur infrarouge (1.1, 2.1).
